# EUROPEAN PATENT APPLICATION

(11) **EP 1 950 753 A1**
(43) Date of publication of application: **30.07.2008**
(21) Application number: 08300021.6
(22) Date of filing: 10.01.2008
(51) Int. Cl.: G11B 7/09, G11B 7/135, G02B 5/18

(54) **Phase shift grating for phase shift differential push-pull tracking**

(30) Priority: 24.01.2007 EP 07101105
(71) Applicant: Thomson Licensing S.A., 92100 Boulogne-Billancourt (FR)
(72) Inventor: Strauch, Frank, 53757 Sankt Augustin (DE)
(74) Representative: Schmidt-Uhlig, Thomas

(57) **Abstract**

The present invention relates to a phase shift grating (12) for phase shift differential push-pull tracking (PS-DPP), and to an apparatus for reading from and/or writing to optical recording media (8) using such a phase shift grating (12).

According to the invention, the phase shift grating (12) has two phase gratings (121, 122), with grating sections on opposite sides of a line (123) separating the two phase gratings (121, 122) being phase shifted by π, which have curved grating lines which are designed such that the first diffraction order of a divergent light beam (3) diffracted by the phase shift grating (12) essentially is a TEM01 mode. The phase shift grating (12) is suitable for a divergent light beam (3).

## Description

The present invention relates to a phase shift grating for phase shift differential push-pull tracking (PS-DPP), and to an apparatus for reading from and/or writing to optical recording media using such a phase shift grating.

For performing differential push pull (DPP) tracking on an optical disk generally three light spots are needed on the disk and on the detector. For this purpose three light beams, i.e. a main beam and two sub-beams, are generated from a single light beam by a grating. The three light spots have to be adapted to the geometry of the disk, which is different for DVD-RW and DVD-RAM. Specifically, the track pitch is different. The adaptation to the geometry is achieved by rotating the grating and can only be optimized for one of the disk types. In order to cope with different types of disks the grating may be rotated into a compromise position, where the maladjustment for the respective other disk type is acceptable. A further solution is to use a so-called phase shift grating, as proposed for example in Ueyama et al.: "A Novel Tracking Servo System for Multitypes of Digital Versatile Disks Using Phase shift Differential Push-Pull Method", Jpn. J. Appl. Phys. Vol. 42 (2003), pp. 952-953. The phase shift grating is suitable for two or more types of disks with different track pitches. It is located before the objective lens in the collimated beam in order to avoid optical aberrations during the generation of the three light beams. Due to this position the phase shift grating also acts on the light beams reflected by the disk, which has to be avoided. This is achieved by a polarization dependent diffraction in combination with a quarter wave plate. Alternatively, the phase shift grating may be located before a beam splitter in the collimated light beam, so that the reflected light beams do not pass the phase shift grating.

As mentioned above the phase shift grating is located in the collimated light beam. However, in order to obtain a compact pickup design or in case no collimator lens is used, it is desirable to place the phase shift grating close to the light source in the divergent light beam. In this case the phase shift grating introduces aberrations in the generated sub-beams. A solution for this problem is shown in Ueyama et al.: "New Tracking Servomechanism Using Phase shift Differential Push-Pull Method for Recordable Optical Disks", Jpn. J. Appl. Phys. Vol. 43 (2004), pp. 4806-4810. In this document a hologram laser unit without collimator is used. As in such a laser unit the detector pattern is narrow, the necessary grating split angle is small. Therefore, the aberrations introduced by the phase shift grating remain in a tolerable range. This is not the case for other types of laser units.

It is an object of the invention to propose a phase shift grating for phase shift differential push-pull tracking, which is suitable for a divergent light beam.

According to the invention, this object is achieved by a phase shift grating having two phase gratings, with grating sections on opposite sides of a line separating the two phase gratings being phase shifted by π, which have curved grating lines which are designed such that the first diffraction order of a divergent light beam diffracted by the phase shift grating essentially is a TEM01 mode. The TEM01 mode is a mode having two lobes and a node in the center. The curved grating lines are designed to suppress side modes of the TEM01 mode. The phase shift grating according to the invention allows to generate the light beams that are needed for push-pull tracking. The diffracted light beams are spatially structured in such a way that different distances between lands and grooves generate essentially the same tracking signals.

An apparatus for reading from and or writing to optical recording media advantageously includes a phase shift grating according to the invention. The phase shift grating is preferably arranged in a divergent light beam of a laser diode to generate the light beams that are needed for push-pull tracking. The phase shift grating is designed for a compact pickup design, as it can be placed close to the laser diode, e.g. between the laser diode and a collimator or between the laser diode and a beam splitter. The latter arrangement is especially advantageous for a pickup using finite optics, which does not have a collimator. Diffraction of a divergent beam would normally lead to optical aberrations. These are avoided by the curved grating lines.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows an optical pickup according to the prior art,
- Fig. 2: schematically depicts the geometry of the light spots used for differential push-pull tracking for a DVD-RW and a DVD-RAM,
- Fig. 3: illustrates a pickup with a phase shift grating,
- Fig. 4: schematically depicts the geometry of the light spots used for phase-shift differential push-pull tracking for a DVD-RW and a DVD-RAM,
- Fig. 5: shows a phase shift grating according to the prior art,
- Fig. 6: illustrates a simulation result of the intensity distribution of a first order beam generated by the grating of Fig. 5,
- Fig. 7: shows the grating lines of an optimized curved grating according to the invention,
- Fig. 8: shows the optimized phase shift grating according to the invention, and
- Fig. 9: illustrates a simulation result of the intensity distribution of the first order beam generated by the grating of Fig. 8.

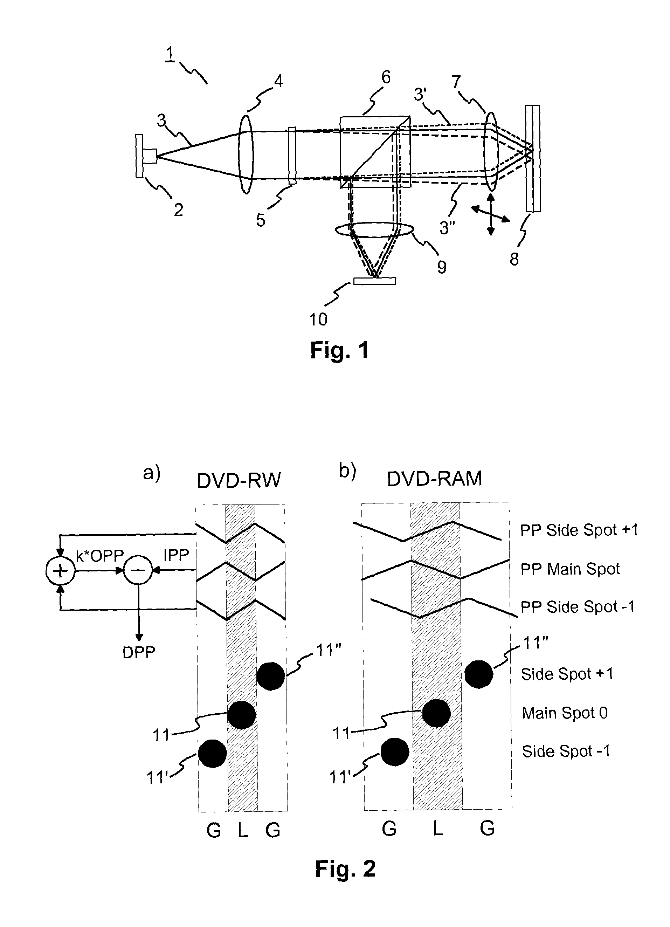

In Fig. 1 an optical pickup 1 according to the prior art is shown. A light source 2 emits a light beam 3, which is collimated by a collimator lens 4. The collimated light beam 3 passes a grating 5, which generates two additional side beams 3', 3" from the light beam 3. The three beams 3, 3', 3" pass a beam splitter cube 6 and are imaged onto an optical recording medium 8 by an objective lens 7. The light beams 3, 3', 3" reflected from the optical recording medium 8 are again collimated by the objective lens 7 and deviated by the beam splitter 6 towards a further lens 9, which focuses the light beams 3, 3', 3" onto a detector 10.

The geometry of the light spots 11, 11', 11" of the focused light beams 3, 3', 3" is illustrated in Fig. 2 for the cases of a DVD-RW (Fig. 2a)) and a DVD-RAM (Fig. 2b)). The three spots 11, 11', 11" enable a tracking servo to perform differential push-pull tracking. The schematic curves shown in the upper part of the figure represent the push-pull signals (PP) of the respective spots 11, 11', 11" on the main track (land L) and the adjacent side tracks (grooves G), which are generated by the reflection at the track edges. Each push-pull signal has an offset (not shown), which originates from a movement of the light spots on the detector 10 during a deflection of the objective lens. This offset disturbs the tracking servo and is, therefore, eliminated by a signal processing in accordance with DPP=k*OPP-IPP, as illustrated in the top-left part of the figure. OPP is the outer push-pull signal, IPP is the inner push-pull signal and k is a gain factor. The outer push-pull signal OPP is obtained by summing the push-pull signals of the side spots 11', 11". The push-pull portion is not eliminated, as OPP and IPP are exactly in antiphase. This antiphase condition is also given for a DVD-RAM. However, when the pickup is optimized for a DVD-RW, the signal amplitude of the OPP signal is reduced for the DVD-RAM. This is due to the fact that the push-pull signals of the side spots 11', 11", which contribute to OPP, are time shifted relative to each other. In the worst case, the OPP signal almost disappears. This means that at a change from a DVD-RW to a DVD-RAM the amplitude of the DPP signal changes by a factor of 2, which is difficult to cope with for the tracking servo.

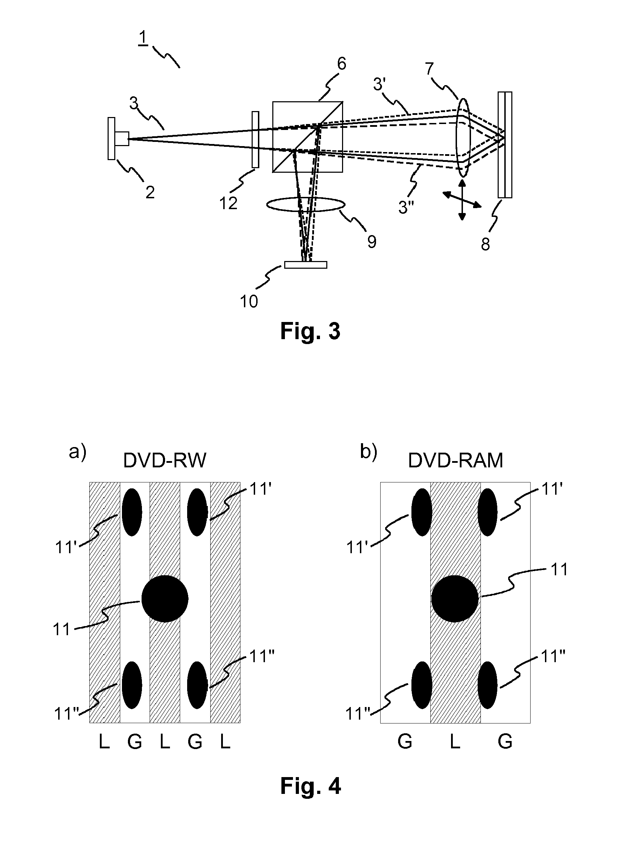

Fig. 3 illustrates a pickup 1 with a phase shift grating 12. Contrary to the pickup of Fig. 1 this pickup 1 does not have a collimator lens 4, i.e. the pickup uses finite optics. This means that the phase shift grating 12 is located in a divergent light beam 3. Also in this case the phase shift grating 12 generates two diffracted side beams 3', 3" from the light beam 3 in addition to the main beam 3. However, due to the use of a phase shift grating 12 instead of a normal grating 5 both side beams 3', 3" are further divided into two sub beams with an oval cross section.

The geometry of the light spots 11, 11', 11" of the focused light beams 3, 3', 3" is illustrated in Fig. 4 for the cases of a DVD-RW (Fig. 4a)) and a DVD-RAM (Fig. 4b)). The diffracted side beams 3', 3" are present as a spatial TEM01 mode, whereas the main beam 3 remains in the TEM00 mode. The phase shift grating 12 is arranged such that the axes of all three light beams 3, 3', 3" are located on the same track, i.e. in line with the track. Therefore, the phase shift grating 12 is sometimes referred to as an inline grating. In order to have the OPP signal and the IPP signal in antiphase, the intensity maxima of the light spots 11', 11" of the side beams 3', 3" in the TEM01 mode have to be located outside the main track. This is feasible for both DVD-RW and DVD-RAM at the same time and depends only on the size of the corresponding main spot 11 of the TEM00 mode. A simple proof is possible by analyzing the TEM01 intensity distribution. As the distance of the two side lobes 11', 11" is equal to 120% of the FWHM of the TEM00 mode, which can be derived from the mathematical expression of the TEM01 mode, the above requirement is fulfilled. The FWHM essentially corresponds to the diameter of the black disk 11 indicating the zeroth order spot in Fig. 4. The further signal processing is the same as described with reference to Fig. 1. A simulation of the push-pull signals yields that for this situation the amplitude of the DPP signal is less affected by a change from a DVD-RW to a DVD-RAM.

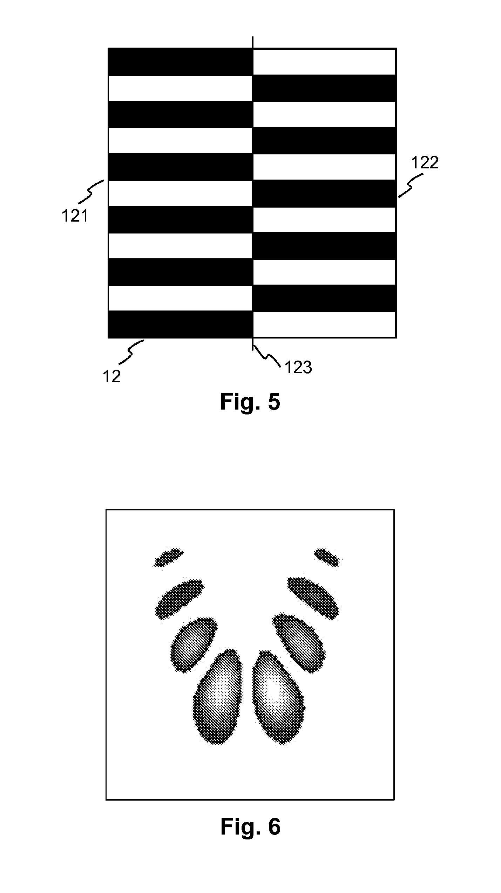

A prior art phase shift grating 12 for generating the light spots 11, 11', 11" is illustrated schematically in Fig. 5. The grating 12 consists of two phase gratings 121, 122 with the same grating period. However, both phase gratings 121, 122 have a relative phase shift of π, i.e. the grating sections on opposite sides of a center line 123 are phase shifted by π. The phase gratings 121, 122 generate a zero order beam and ±1st order beams. Due to the phase difference between the gratings 121, 122, the ±1st order beams are further split into the two sub beams. Further diffraction orders are weak and are omitted in the figures. For normal differential push-pull tracking the grating lines are slanted relative to the track normals. The slanting angle depends on the track pitch. In contrast, for the phase shift grating 12 of Fig. 3 the grating lines are arranged such that they are perpendicular to the tracks. In this way the side spots 11', 11" of the sub beams are arranged symmetrically to the main track.

The diffraction at the phase shift grating 12 of Fig. 5 was simulated using wave optics. For this purpose the phase shift grating 12 was integrated into the optical system of a pickup 1. The result is shown in Fig. 6, which depicts the intensity distribution of a first order beam in the plane of the optical recording medium 8. The simulation area is 7x7µm² . As can be seen, the TEM01 mode has further side modes, which are caused by the diffraction of the divergent light beam 3. The total area occupied by the modes is derivable from the aberration limited spot form, which can be determined by a simulation with ray tracing software. In other words, the enlarged spot of the first order beam consists of a plurality of side modes. In analogy, a normal grating would produce a first order beam consisting of a TEM00 mode with side modes.

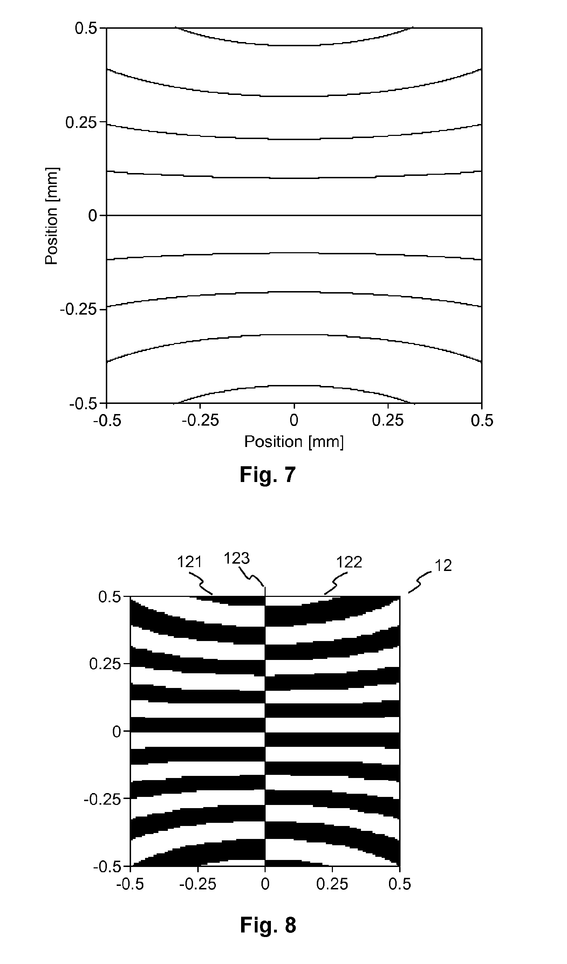

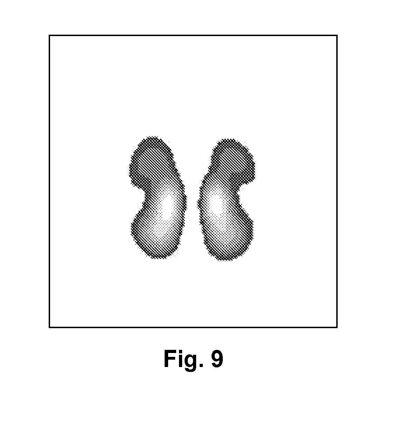

The side modes of the TEM01 mode can disturb the push-pull signal, as they can impinge on neighboring track edges. Therefore, the side modes need to be suppressed. For this purpose the diffracted light beams 3', 3" are optimized with regard to their size and their beam profile using optic design software, by varying the phase coefficients of the phase shift grating 12 using standard optimization ray tracing procedures. The result is a grating as shown in Fig. 7, where every 3rd grating line is depicted on an area of 1x1mm². The combination of Fig. 5 and Fig. 7 leads to a grating as illustrated in Fig. 8, which only generates a pure TEM01 mode. The wave optical simulation of the diffraction is shown in Fig. 9. Again, the simulation area is 7x7µm².

## Claims

1. Phase shift grating (12) having two phase gratings (121, 122), with grating sections on opposite sides of a line (123) separating the two phase gratings (121, 122) being phase shifted by π, **characterized in that** the two phase gratings (121, 122) have curved grating lines which are designed such that the first diffraction order of a divergent light beam (3) diffracted by the phase shift grating (12) essentially is a TEM01 mode.

2. Phase shift grating (12) according to claim 1, **wherein** for a DVD-RW and a DVD-RAM the side lobes of the TEM01 mode are located on side tracks adjacent to a main track when the zeroth diffraction order of the phase shift grating (12) is located on said main track.

3. Phase shift grating (12) according to claim 1 or 2, **wherein** the curved grating lines are designed to suppress side modes of the TEM01 mode.

4. Apparatus for reading from and or writing to optical recording media, **characterized in that** it includes a phase shift grating (12) according to one of claims 1 or 2.

5. Apparatus according to claim 4, **wherein** the phase shift grating (12) generates side beams (3', 3") for push-pull tracking.

6. Apparatus according to claim 4 or 5, **wherein** the phase shift grating (12) is arranged in a divergent light beam (3) of a laser diode (2).

7. Apparatus according to one of claims 4 to 6, **wherein** the apparatus has a pickup (1) using finite optics.
